# EUROPÄISCHE PATENTSCHRIFT

(11) **EP 0 580 891 B1**
(45) Veröffentlichungstag und Bekanntmachung des Hinweises auf die Patenterteilung: **12.03.1997**
(21) Anmeldenummer: 92113068.8
(22) Anmeldetag: 31.07.1992
(51) Int. Cl.: G09F 9/37, B43L 1/00

(54) **Bildschirm für die magnetische Bildaufzeichnung**
Display screen for magnetic image recording
Ecran pour l'enregistrement magnétique des images

(43) Veröffentlichungstag der Anmeldung: 02.02.1994
(73) Patentinhaber: JAPAN CAPSULAR PRODUCTS, INC., Chiyoda-ku, Tokyo 101 (JP)
(72) Erfinder: Masayuki, Nakanishi, Koza-gun Kanagawa-ken (JP); Yasuyuki, Kanno, Hiratsuka-shi Kanagawa-ken (JP)
(74) Vertreter: Henfling, Fritz, Dipl.-Ing.

(56) Entgegenhaltungen:
- EP-A- 0 299 479
- EP-A- 0 436 262
- US-A- 4 232 084
- PROCEEDINGS OF THE SID, Bd. 18, Nr. 3 &4, April 1977, BOSTON, MA, US Seiten 283 - 288 L.L. LEE 'Fabrication of Magnetic Particles Displays'
- INTERFACE AGE Bd. 7, Nr. 3, März 1982, CERRITOS, CA., US Seiten 28 - 33 R.C. GARRETT 'Magnetic Liquid Display'

## Beschreibung

Die Erfindung betrifft einen Bildschirm für die magnetische Bildaufzeichnung, bestehend aus einem unmagnetischen, tranparenten Träger, der an seiner Rückseite mit einem Belag versehen ist, in den Kapseln eingelagert sind, in denen sich ein in einer ölartigen Flüssigkeit dispergiertes Gemisch von magnetischen, lichtabsorbierenden Partikeln und unmagnetischen, lichtreflektierenden Partikeln befindet.

Dieses System basiert auf der gegenläufigen Verlagerung der in den in den Bildschirmbelag enthaltenden Kapseln befindlichen magnetischen lichtabsorbierenden Partikel und der unmagnetischen, lichtreflektierenden Partikel unter der Einwirkung eines Magneten der an der Oberfläche des Bildschirms, also des transparenten Trägers, angesetzt, die das Bild ausbildende magnetischen lichtabsorbierenden Partikel zur Bildschirmoberfläche, konkret zu den der Bildschirmoberfläche zugekehrten Bereichen der in den Bildschirmbelag eingelagerten, die Partikel enthaltenden Kapseln, unter gleichzeitiger gegenläufiger Verlagerung der unmagnetischen lichtreflektierenden Partikel orientiert, während die Löschung des Bildes unter der Einwirkung eines an der Rückseite des Bildschirms entlang geführten, die magnetischen, lichtabsorbierenden Partikel zu den der Rückseite des Bildschirms zugekehrten Bereichen der die Partikel enthal-tenden Kapseln unter gleichzeitiger gegenläufiger Verlage-rung der unmagnetischen, lichtabsorbierenden Partikel in Richtung auf die Frontseite des Bildschirms hin erfolgt. Ein solches System, bei dem die Bestandteil des Belages bildenden, lichtabsorbierende und lichtreflektierende Partikel enthaltenden Kapseln eine übereinstimmende, in einem Bereich zwischen 100 und 400 Mikron liegende Größe aufweisen, ist der EP-A-0 436 262 zu entnehmen. Dieses System zeichnet sich anderen auf magnetischer Basis arbeitenden Bildschirmsystemen bei kostengünstiger Her-stellbarkeit des Bildschirms durch einen vergleichsweise guten Hell/Dunkel-Kontrast und durch eine vergleichsweise ausgeprägte Konturenschärfe aus.

Vor diesem Hintergrund liegt der Erfindung die Aufgabe zugrunde, die Qualität des nach diesem Stand der Technik erzeugbaren Bildes weitergehend zu verbessern.

Die Aufgabe wird erfindungsgemäß mit einem gattungsgemäßen Bildschirm gelöst, bei dem
in dem das Bild ausbildenden Belag lichtabsorbierende und lichtreflektierende Partikel enthaltende Kapseln in mindestens zwei unterschiedlichen Größen bei einem maximalen Durchmesser von 1000 Mikron und einem minimalen Durchmesser von 100 Mikron eingelagert sind.

Gemäß Anspruch 3 liegen die in den Kapseln enthaltenen magnetischen lichtabsorbierenden Partikel in mindestens zwei Größen in einem Bereich von 0,2 Mikron bis zu mehreren Mikron vor.

Mit dem Ziel der Optimierng der Bildqualität können in dem bildausbildenden Belag weitergehend vorgesehen sein
zusätzlich lediglich Öl enthaltende Kapseln wesentlich kleineren Durchmessers als die die magnetischen und die unmagnetischen Partikel enthaltenden Kapseln,
und in den die magnetischen lichtabsorbierenden sowie die unmagnetischen lichtreflektierenden Partikel enthaltenden Kapseln zusätzlich aus hartmagnetischem Ferrit bestehende, nach dem Auftragen des die Kapseln enthaltenden Belages auf den Bildschirmträger in Permanentmagneten überführbare Partikel.

Positiv wirkt sich auf die Bildqualität dann auch aus, wenn
die Oberfläche der in den Kapseln eingelagerten magnetischen wie auch unmagnetischen Partikeln lipophil eingestellt wird.

Besonders vorteilhafte Zusammensetzungen des Bildschirmbelages ergeben sich aus den hier im einzelnen nicht angesprochenen Unteransprüchen 2, 4, 5, 7, 8 und 10.

Sowohl der Hintergrund als auch Details, insbesondere auch die Fakten, die zu der gewünschten weitergehenden Verbesserung der Qualität des mit dem erfindungsgemäßen Bildschirm erzielbaren Bildes führen, sind in der Beschreibung zu der die Erfindung weitergehend erläuternden Zeichnungen angesprochen. Es zeigen:

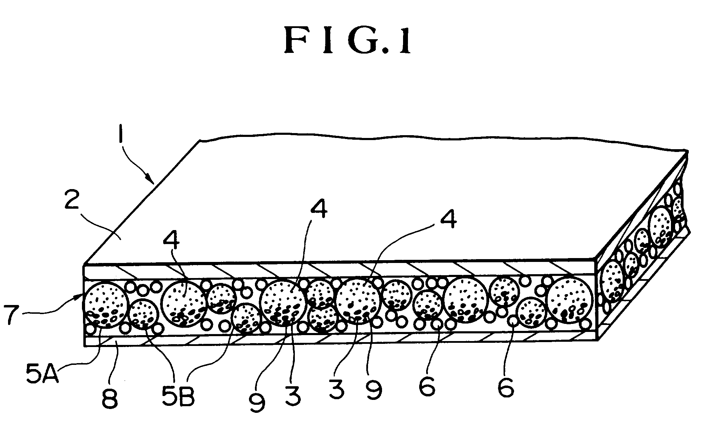

- Figur 1: einen erfindungsgemäß belegten Bildschirmausschnitt,
- Figur 2: einen Bildschirm mit seiner Rückseite zugeordnetem mechanismus,
- Figur 3: den Bestandteil des Löschmechanismus in Fig. 2 bildenden Magneten,
- Figur 4: eine den Löschvorgang verdeutlichende Darstellung,
- Figur 5: einen Ausschnitt aus Figur 4 in größerem Maßstab,
- Figur 6: einen magnetischen Schreiber,
- Figur 7: eine den Schreibvorgang verdeutlichende Darstellung,
- Figur 8: einen Ausschnitt aus Fig. 7 in größerem Maßstab.

Der Bildschirm 1 besteht aus dem unmagnetischen, die Sichtseite des Bildschirms bildenden Träger 2, der von einem Belag 7 hinterfangen ist, in den Kapseln 5 (5A u. 5B) und 6 eingelagert sind. Die eine im Mikron-Bereich liegende Größe aufweisenden Kapseln 5 enthalten in Öl dispergiert magnetische, lichtabsorbierende Partikel 3 und unmagnetische lichtreflektierende Partikel 4 sowie permanentmagnetische Partikel 9. Die bezüglich der Kapseln 5 wesentlich kleineren Kapseln 6 enthalten lediglich Öl. Hinterfangen ist der Belag 7 mit den Kapseln 5 und 6 von einer Schutzschicht 8. Was den Träger 2 betrifft, kann es sich dabei um eine biegesteife Platte oder aber um eine flexible Bahn aus einem geeigneten Kunststoff, Fieberglas, Glas, Papier oder dergleichen hinreichender Festigkeit handeln.

Das gewünschte Bild wird an der Sichtfläche des Bildschirms durch ein magnetisches Feld erzeugt, durch das die magnetischen, lichtabsorbierenden Partikel 3 in den Kapseln 5 unter damit einhergehender gegenläufiger Verlagerung der unmagnetischen, nicht reflektierenden Partikel 4 in Richtung auf die Oberfläche des Bildschirms, also zum Träger 2, hin verlagert werden. Für die Qualität des Bildes sind in erster Linie maßgebend der Kontrast zwischen Hell und Dunkel, hervorgerufen durch die Absorbtion von Licht durch die magnetischen, lichtabsorbierenden Partikel 3 und die Reflektion von Licht durch die unmagnetischen, lichtreflektierenden Partikel 4 sowie die Konturenschärfe des Bildes, die ihrerseits abhängt einerseits von dem Hell/Dunkel-Kontrast und andererseits von der Schnelligkeit der Lageveränderung der magnetischen lichtabsorbierenden Partikel 3 und der unmagnetischen lichtreflektierenden Partikel 4 in Verbindung mit der Fähigkeit das entstandene Bild anschließend aufrechtzuerhalten. Beeinflußt wird die Bildqualität unter anderem von der Größe der Bestandteil des Bildschirmbelages bildenden Kapseln, der Größe der in den Kapseln enthaltenen magnetischen und unmagnetischen Partikel, dem Grad der Beweglichkeit der in Öl dispergierten Partikel in Abhängigkeit von ihrer Größe sowie der Viskosität der Partikeldispersion, wobei die jeweiligen quantitativen Werte der im vorausgehenden angesprochenen Größen des Bildschirmbelages sich zumindest teilweise unterschiedlich auf die für die Qualität des Bildes maßgebenden Faktoren auswirken.

Mit dem Ziel, die Zusammensetzung der den Bildschirmbelag bildenden Teile zu optimieren, also eine Zusammensetzung des Belages vorzuschlagen, die ein qualitativ hochwertiges Bild ergibt, werden in den im übrigen die lediglich Öl enthaltenen Partikel 6 aufweisenden Belag 7 Kapseln 5A und 5B mit unterschiedlichen Durchmessern eingelagert, die magnetische, lichtabsorbierende Partikel 3 sowie unmagnetische, lichtreflektierende Partikel 4 unterschiedlicher Größe bei einem definierten Verhältnis der Partikel 3 zu den Partikeln 4 enthalten, wobei sowohl die Partikel 3 als auch die Partikel 4 oberflächig lipophil eingestellt sind, und des weiteren nach dem Aufbringen des Belages 7 auf den Bestandteil des Bildschirms 1 bildenden Träger 2 in Permanentmagnete überführbare Partikel 9.

Was die in den Kapseln 5 enthaltenen magnetischen, lichtabsorbierenden Partikel 3 und die unmagnetischen, lichtreflektierenden Partikel 4 betrifft, bestehen die Partikel 3 aus FeO mit einem 10% des Partikels ausmachenden, mit Hilfe von Silikon auf dem Partikel aufgebrachten Belag aus MnO₂ einer Partikelgröße (Durchmesser) von 0,5 Mikron und von 0,3 Mikron bei einem Mischungsverhältnis von 3:1. Was die unmagnetischen, lichtreflektierenden Partikel 4 betrifft, handelt es sich dabei um Partikel aus TiO₂ eines Durchmessers von im wesentlichen 0,3 Mikron. Die Partikel 3 und die Partikel 4 werden dispergiert in Dibutylphthalat mit einem Anteil von 4 Gew.% an Partikeln 3 und 14 Gew.% an Partikeln 4.

Als nächstes sei der Aufbau der die die Partikel 3 und 4 enthaltenden Kapseln 5 (5A u. 5B) ausbildenden Hüllen beschrieben. Dazu wurde eine wässrige, 11% Gummiarabikum enthaltende Lösung einer wässrigen Lösung mit einem Anteil von 11% Gelatine zugesetzt und auf einen PH-Wert = 6 eingestellt. Das Gemisch wurde sodann auf Temperaturen um 50°C bis zur Einstellung eines PH-Wertes = 4 erwärmt. Anschliessend wurde dieser Lösung die vorweg beschriebene, die Partikel 3 und die Partikel 4 enthaltende Lösung hinzugefügt und die daraus resultierende Lösung bis zur Ausbildung von Flüssigkeitströpfchen einer Größe von ca. 400 Mikron gerührt bzw. geschüttelt. Nach Vorliegen der gewünschten Flüssigkeitströpfchen wurde eine der vierfachen Menge dieser Lösung entsprechende Menge an Wasser hinzugefügt und im Anschluß an eine Wärmebehandlung (annealing) auf eine Temperatur von 10°C abgekühlt, wobei sich ein die Kapselhüllen ausbildender Film aus Gelatine und Gummiarabikum auf den Tröpfchen der die Partikel 3 und 4 enthaltenen Lösung ausbildet. Durch einen anschließenden Zusatz von 25% Glutalaldehyd wurde der polimäre Film sodann ausgehärtet, woraus die Kapseln 5A entstanden. In einem vergleichbaren Verfahrensablauf wurden die mit Bezug auf die Kapseln 5A kleineren Kapseln 5B eines Durchmessers von ca. 200 Mikron hergestellt.

Für die Herstellung der lediglich Öl enthaltenden Kapseln 6 wurde zunächst je eine wässrige Lösung von Gelatine und von Gummiarabikum, in beiden Fällen mit einem Anteil von 11% an Gelatine bzw. Gummiarabikum unter Einstellung eines PH-Wertes = 6 hergestellt. Der wässrigen Lösung aus Gelatine wurde sodann Dibutylphthalat mit einem Anteil von 80 Gew.% der Gelatinelösung hinzugefügt. Das daraus resultierende System wurde einer Behandlung unterworfen, aus der eine O/W-Typ Emulsion resultierte, aus der Öltropfen einer Größe von 40 Mikron herstellbar waren. Dieser Emulsion wurde die wässrige Gummiarabikum-Lösung anteilig hinzugefügt und das Gemisch auf eine Temperatur von 50°C erwärmt und bei einem auf 4,5 gesenkten PH-Wert anschließend eine der 4-fachen Menge der wässrigen Gelatinelösung entsprechende Menge Wasser hinzugefügt und der so sich auf den Öltröpfchen ausbildende polymere Film ausgehärtet, woraus die öl enthaltenen Kapseln 6 resultierten.

Die in Form eines wässrigen Breis mit einem Anteil von jeweils ca. 20% angefallenen Kapseln 5A, 5B und 6 wurden in einem Mischungsverhältnis von 10 : 5 : 3 zusammengesetzt, der Wassergehalt des Breis auf die Hälfte reduziert und eine wässrige Lösung von 10% Polyvenylalkohol entsprechend dem verbleibendem breiigem Gemisch zugesetzt, der auf die Rückseite des eine Dicke von 100 Mikron aufweisenden Trägers aus Polyäthylentelephthalat in einer Lackgießanlage unter Einstellung einer Schichtdicke von 500 Mikron aufgebracht und anschließend unter Einwirkung von heißer Luft den Belag 7 auf dem nichtmagne-tischen Träger 2 ausbildend getrocknet wurde.

Was die in die Kapseln 5A und 5B eingelagerten magnetischen lichtabsorbierenden Partikel betrifft, handelt es sich dabei um drei Gruppen, nämlich um die beiden übereinstimmend mit 3 bezeichneten Partikel bestehend aus FeO mit einer mit Hilfe von Silikon auf sie aufgebrachten, 10% des Partikels ausmachenden MnO₂-Schicht einer Partikelgröße von 0,5 Mikron sowie in entsprechender Weise zusammengesetzten Partikeln mit einem Durchmesser von 0,3 Mikron sowie um mit der Bezugziffer 9 bezeichnete anisotrope magnetische Partikel eines Durchmessers von 1,0 Mikron, einer Zusammensetzung von Sm = 25,5%, Co = 50%, Cu = 8%, Fe = 15% und Zr = 1,4%, die in einem gewichtsmäßigen Verhältnis von 60 : 30 : 10 zusammengesetzt werden.

Dieses Gemisch aus den magnetischen lichtabsorbierenden Partikeln 3 und 9 geht ein in die Mischung mit den unmagnetischen lichtreflektierenden Partikeln 4, die daraus resultierende Mischung wiederum wird Bestandteil einer Dispersion in Dibutylphthalat mit einem Anteil von 14 Gew.% des Partikelgemisches 3/9 und einem Anteil von 5 Gew.% der Partikel 4. Diese Dispersion geht wie vorbeschrieben ein in die Kapseln 5 unter Ausbildung der Kapselgrößen 5A und 5B. Die Kapseln 5A und 5B sowie die lediglich Öl enthaltenden Kapseln 6 gehen in einem Verhältnis von 10 : 5 : 3 in die Beschichtungslösung ein, die durch den Zusatz einer 10%igen wässrigen Lösung von Polyvinylalkohol entstanden ist, mit dem die oberflächig vorbereitete Trägerplatte aus Polyäthylentelephthalat einer Dicke von 100 Mikron aufgetragen und getrocknet wurde, woran sich die Magnetisierung der anisotropen magnetischen Partikel 9 anschließt. Dem eingangs beschriebenen Bildschirm gegenüber erweist sich der den erfindungsgemäßen Aufbau aufweisende Bildschirm als überlegen, was die Aufzeichnungs- und Löschansprechempfindlichkeit sowie die Bildschärfe betrifft.

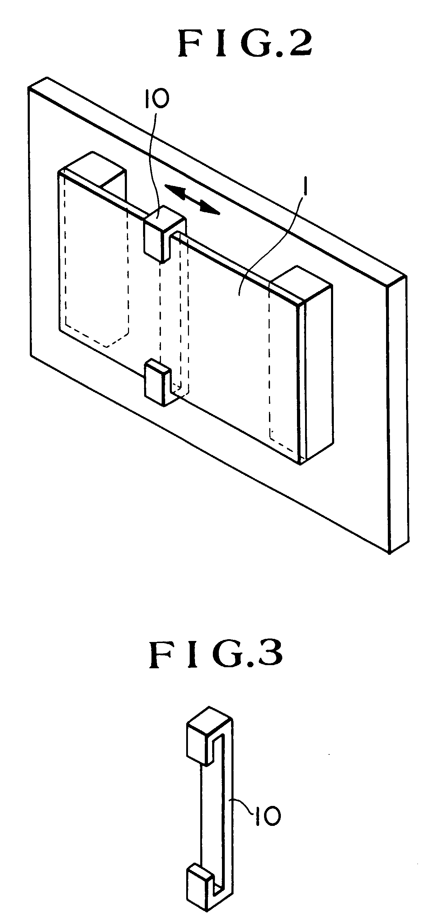

Aus Figur 2 ist die Zusammenfassung des Bildschirms 1 mit dem in Figur 3 eigenständig dargestellten Löschelement 10 angedeutet, dessen an die Rückseite des Bildschirms 1 angrenzender Rücken als Löschmagnet ausgelegt ist. Wird das Löschelement im Sinne des Doppelpfeiles in Figur 2 über die Breite des Bildschirms verfahren, werden in die das Bild ausbildenden magnetischen lichtabsorbierenden Partikel 3 sowie die magnetischen Partikel 9 aus ihrer der Frontseite des Bildschirms angenäherten Lage in den Kapseln 5A und 5B unter Verdrängung der nichtmagnetischen lichtreflektierenden Partikel in den Kapseln 5A und 5B in den der Rückseite des Bildschirms zugewandten Bereich der Kapseln 5A und 5B verlagert und so das Bild gelöscht.

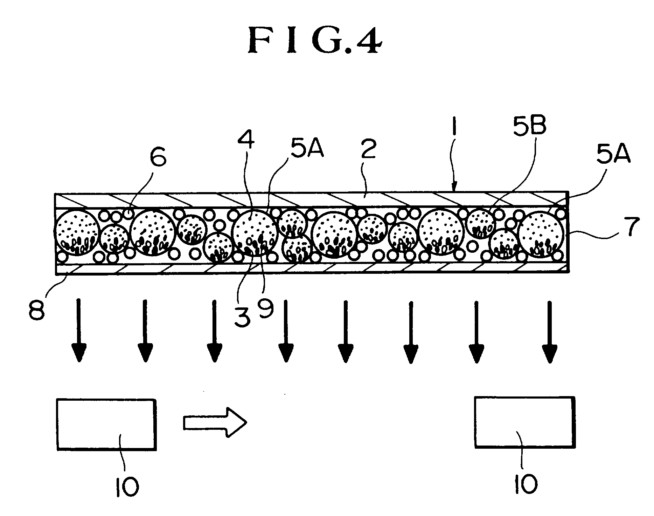

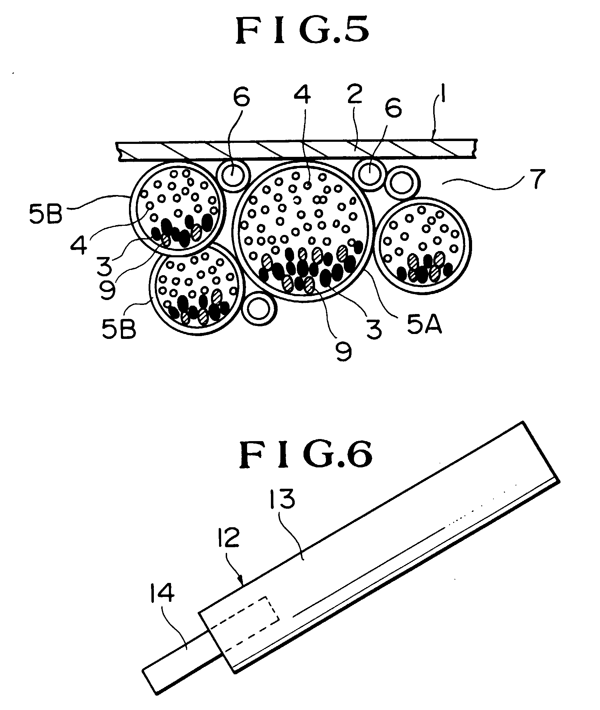

Figur 4 zeigt den Zustand des Bildschirms, konkret des in aktiviertem Zustand das Bild hervorrufenden Belages 7 des Bildschirms, nach Betätigung des Löschelementes 10. Die magnetischen, lichtabsorbierenden Partikel 3 und die magnetischen Partikel 9 in den Kapseln 5A und 5B sind in den Kapseln 5A und 5B in deren der durch die Schutzschicht 8 definierten Rückseite des Bildschirms 1 zugewandte Bereiche unter Verdrängung der unmagnetischen lichtreflektierenden Partikel 4 zu den frontseitigen Bereichen der Kapseln 5A und 5B hin verlagert. Der Bildschirm ist in dieser Situation frei von Aufzeichnungen. Figur 5 gibt diese Situation noch deutlicher wieder. Einfallendes Licht wird an den zu den frontseitigen Bereichen der Kapseln 5A und 5B hin verlagert unmagnetischen lichtreflektierenden Partikel 4 reflektiert und die gesamte Oberfläche des Bildschirms erscheint blank bzw. weiß.

In Figur 6 ist in ganz schematischer Weise ein magnetischer Schreiber dargestellt. In dem Bestandteil des magnetischen Schreibers bildenden Griffstück 13 ist in dessen Endbereich 12 ein zweipoliger Stabmagnet 14 mit Überstand eingelagert, wobei es sich um einen Permanentmagneten handelt.

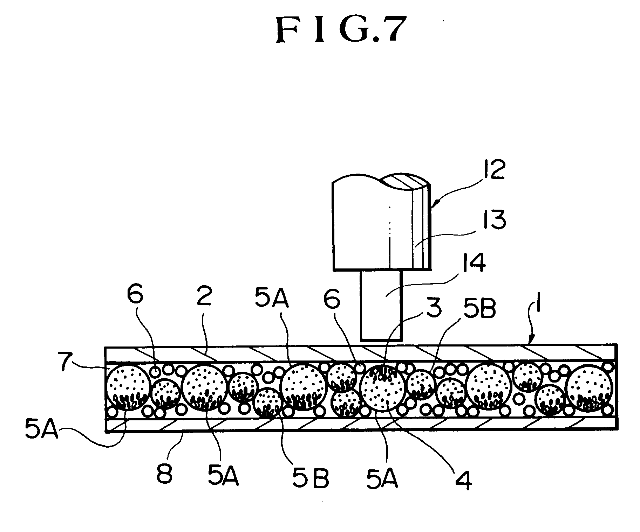

Figur 7 zeigt den Bildschirm, konkret einen Ausschnitt aus dem Bildschirm, im Querschnitt, mit an ihm angesetztem magnetischen Schreiber 12, der in dem von ihm beaufschlagten Bereich des Bildschirms die in den in diesem Bereich befindlichen Kapseln 5A befindlichen magnetischen lichtabsorbierenden Partikel 3 in Verbindung mit den magnetischen Partikel 9 zum frontseitigen Bereich der Kapseln 5A unter gleichzeitiger Orientierung der unmagnetischen, lichtreflektierenden Partikel 4 zur Rückseite des Bildschirms hin, konkret zum der Rückseite des Bildschirms zugewandten Bereich der Kapseln 5A, verlagert hat.

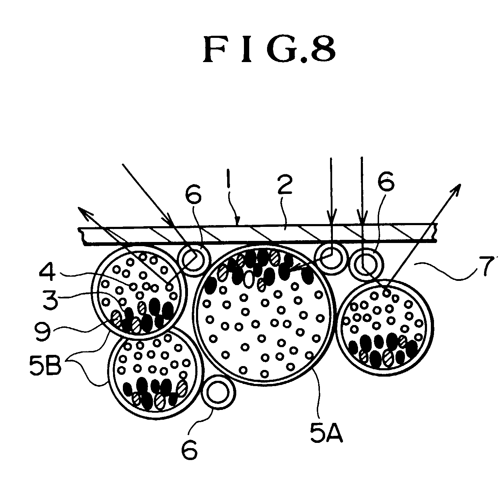

Die Entstehung des so erzeugten Bildes sei an der schnittsdarstellung in Figur 8 erläutert. Der Bereich des Bildschirms, in dem die in den Kapseln 5A und gegebenenfalls dann auch 5B befindlichen magnetischen, lichtabsorbierenden Partikel 3 zum frontseitigen Bereich der Kapseln 5A und 5B hin verlagert sind, erscheint auf dem Bildschirm dunkel, da das in diesem Bereich einfallende Licht von den Partikeln 3 absorbiert wird. Die in den in den von dem magnetischen Schreiber 12 nicht beaufschlagten Bereichen des Bildschirms befindlichen Kapseln 5A und 5B befindlichen magnetischen, lichtabsorbierenden Partikel 3 und die unmagnetischen, lichtreflektierenden Partikel 4 hingegen befinden sich nach wie vor in ihrer von der vorausgehenden Löschung herrührenden Positionierung, also die magnetischen, lichtabsorbierenden Partikel 3 in den von der Frontseite des Bildschirms abgekehrten Bereichen der Kapseln 5A und 5B und die unmagnetischen, lichtreflektierenden Partikel 4 in den der Frontseite des Bildschirms zugekehrten Bereichen der Kapseln, diese Bereiche des Bilschirms verbleiben also in ihrem blanken bzw. weißen Zustand. Der Kontrast zwischen den von den die aktivierten, magnetischen lichtabsorbierenden Partikel enthaltenden Kapseln 5A und 5B hinterfangenen Bereichen des Bildschirms und den von den nach wie vor in ihrer Löschsituation befindlichen magnetischen, lichtabsorbierenden Partikel enthaltenden Kapseln beaufschlagten Bereichen des Bildschirms ergibt das Bild.

Wie im Vorausgehenden bereits ausgeführt, wird mit der Erfindung eine Verbesserung der Bildqualität durch einen speziellen Aufbau des das Bild hervorrufenden Bildschirmbelages erzielt. Dabei ist von folgenden Überlegungen ausgegangen worden:

Mit dem Ziel der Verbesserung des Hell/Dunkel-Kontrastes, der auf der Orientierung der magnetischen, lichtabsorbierenden Partikel 3 einerseits und der der unmagnetischen, lichtreflektierenden Partikel 4 in den Kapseln 5A und 5B andererseits beruht, sollte der Durchmesser der Kapseln möglichst groß gewählt werden, die dann auch einen entsprechend großen Anteil sowohl an lichtabsorbierenden Partikel 3 als auch an lichtreflektierenden Partikel 4 enthalten, woraus bei einer Verlagerung der lichtabsorbierenden Partikel 3 aus dem frontseitigen Bereich der Kapseln zu deren rückwärtigen Bereich eine dichtere Schicht an lichtereflektierenden Partikeln 4 im frontseitigen Bereich der Kapseln 5 resultieren würde. Umgekehrt würde sich bei einer Aktivierung der magnetischen, lichtabsorbierenden Partikel 3 im frontseitigen Bereich der Kapseln 5A und 5B eine dickere Schicht an lichtabsorbierenden Partikel 3 ausbilden, die dann auch eine gute Abschirmung der aus dem frontseitigen Bereich der Kapseln verlagerten lichtreflektierenden Partikel 4 ergeben würde. Allerdings würde bei dem auf diese Weise erzeugten verbesserten Hell/Dunkel-Kontrast eine verringerte Konturenschärfe in Kauf zu nehmen sein.

Wenn hingegen die Größe bzw. der Durchmesser der Kapseln 5A und 5B und dementsprechend dann auch das Aufnahmvermögen der Kapseln für die lichtabsorbierenden Partikel 3 und die lichtreflektierenden Partikel 4 verringert wird, läßt sich zwar ein dichtes, konturenscharfes Bild erzeugen. Allerdings muß dann eine Einschränkung der Abschirmung der bei der Aktivierung der magnetischen, lichtabsorbierenden Partikel 3 in den rückwärtigen Bereich der Kapseln verlagert unmagnetischen, lichtreflektierenden Partikel 4 durch die sie überlagernde, von den Partikeln 3 ausgebildete Schicht aufgrund der geringeren Schichtdicke in Kauf genommen werden, was im Ergebnis zu einem unbefriedigten Hell/Dunkel-Kontrast führt. Dieser Diskrepanz wird erfindungsgemäß dadurch begegnet, daß magnetische, lichtabsorbierende Partikel 3 und unmagnetische, lichtreflektierende Partikel 4 enthaltende Kapseln 5A und 5B unterschiedlicher Größe bzw. unterschiedlichen Durchmessers verwendet werden und in den Bildschirmbelag weitergehend dann auch lediglich Öl enthaltende Kapseln 6 wesentlich geringeren Durchmessers als dem der Kapseln 5A und 5B integriert werden.

Mit dem Ziel, die unzureichende Abschirmung der unmagnetischen, lichtreflektierenden Partikel 4 in den kleiner als die Kapseln 5A ausgelegten Kapseln 5B sind die lediglich Öl enthaltenden, eine mit Bezug auf die Größe der Kapseln 5A und 5B wesentlich kleinere Größe aufweisenden Kapseln 6 in den Belag integriert. Solche im frontseitigen Bereich des Belages befindlichen Kapseln 6 lenken in den Randbereichen des vom Schreibmagneten erzeugten Bildes einfallende Lichtstrahlen einerseits zu den die das Bild erzeugenden aktivierten magnetischen, lichtabsorbierenden Partikel 3 enthaltenden Kapseln 5, konkret zu eben den aktivierten Partikeln 3 hin ab und andererseits zu den angrenzenden, die nicht aktivierten, durch die unmagnetischen, lichtreflektierenden Partikel 4 abgeschirmten Partikel 3 enthaltende Kapseln 5A und 5B hin, in denen sie an den zur Frontseite des Bildschirms hin orientierten lichtreflektierenden Partikeln 4 reflektiert werden, womit die aus den kleineren Kapseln 5B zunächst resultierende Unschärfe eliminiert wird. Was die Ablenlenkung des in die lediglich Öl enthaltenden Kapseln 6 einfallenden Lichts zu den die aktivierten, lichtabsorbierenden Partikel 3 enthaltenden Kapseln 5A bzw. 5B hin betrifft, ist diese auf die vergleichsweise kleine Differenz zwischen dem Brechungsindex 1.49 von Dibutylphthalat und dem Brechungsindex 1.65 der magnetischen, lichtabsorbierenden Partikel 3 zurückzuführen, während angrenzend an das durch die aktivierten lichtabsorbierenden Partikel 3 hervorrufene Bild einfallendes Licht eine intensivere Reflektion an den unmagnetischen, mit einem Belag aus TiO₂ versehenen Partikeln 4 aufgrund der großen Differenz zwischen dem Brechungsindex 149 des in den Kapseln 6 enthaltenen Dibutylphthalats und dem Brechungsindex 2.71 des TiO₂ erfährt.

Des weiteren wird der Durchmesser der in den Kapseln 5 enthaltenen magnetischen, lichtabsorbierenden Partikel 3 reduziert, die dann auch in zwei unterschiedliche Größen zum Einsatz kommen, woraus eine dichtere Packung der Partikel 3 resultiert, woraus sich zumal bei einer dann möglichen Reduzierung des Anteils an magnetischen, lichtabsorbierenden Partikeln 3 gegenüber dem Anteil an unmagnetischen, lichtreflektierenden Partikeln 4 in den Kapseln 5 eine wiederum bessere Abschirmung nichtaktivierter Partikel 3 durch die sie überlagernde, sich aus dem dann möglichen größeren Anteil an unmagnetischen, lichtreflektierenden Partikeln ergebende dickere Schicht unmagnetischer, lichtreflektierender Partikel 4 bewirkt wird, woraus wiederum ein besserer Hell/Dunkel-Kontrast resultiert.

Zur Optimierung der Bildqualität wurden also Maßnahmen getroffen, die jeweils für sich betrachtet die Voraussetzung für die Erzeugung eines guten Bildes nicht schaffen. Mit dem Ziel der Verbesserung des Hell/Dunkel-Kontrastes wurde zum einen die magnetischen, lichtabsorbierenden Partikel 3 und die unmagnetischen, lichtreflektierenden Partikel 4 enthaltende Kapseln 5A und 5B unterschiedlicher Größe vorgesehen und zum andern magnetische, lichtabsorbierende Partikel 3 in verschiedenen Größen bei insgesamt reduzierter Größe mit der Möglichkeit, den Anteil an magnetischen, lichtabsorbierenden Partikeln 3 gegenüber dem Anteil an unmagnetischen, lichtreflektierenden Partikeln 4 in den in den Kapseln 5 enthaltenen Partikelgemisch 3/4 zu reduzieren, was sich ebenfalls günstig für den Hell/Dunkel-Kontrast auswirkt.

Der Zusatz von im wesentlichen Sarmarium und Kobald enthaltenden, bei auf dem Bildschirm ausgebildeten Belag permanentmagnetisch anregbaren Partikeln 9zu den die magnetischen, lichtabsorbierenden Partikel 3 und den unmagnetischen lichtreflektierenden Partikel 4 fördert zum einen die Beweglichkeit und zum andern dann auch das Ballungsvermögen der magnetischen, lichtabsorbierenden Partikel 3 mit dem Ergebnis der Verbesserung der Aufzeichnungs- und Löschempfindlichkeit sowie des Hell/Dunkel-Kontrastes.

Eine Verbesserung des gegenläufigen Verlagerungsvermögens der in Öl bzw. einer ölartigen Flüssigkeit dispergierten Partikel ergibt des weiteren eine lipophile Einstellung der Oberfläche der Partikel.

Die Optimierung des Mischungsverhältnisses zwischen den magnetischen lichtabsorbierenden Partikeln 3 und den unmagnetischen lichtreflektierenden Partikel 4 trägt ebenfalls zur Verbesserung des Hell/Dunkel-Kontrastes bei.

Die dann auch noch in den Bildschirmbelag eingelagerten, lediglich Öl enthaltenden Kapseln 6, durch die zum einen einfallendes Licht zu den aktivierten, in den Kapseln enthaltenen magnetischen lichtabsorbierenden Partikeln abgelenkt wird und zum andern in bildangrenzende Bereiche einfallendes Licht zu den in den in diesen Bereich nicht aktivierte Kapseln, und zwar zu den zum oberflächennahen Bereich dieser Kapseln hin orientierten, unmagnetischen, lichtreflektierenden Partikeln hin, abgelenkt und von diesen reflektiert wird, kompensieren negative Einflüsse anderer Einflußgrößen auf die Qualität des Hell/Dunkel-Kontrastes.

Insgesamt erbringt die gezielte Zusammensetzung des Bildschirmbelages ein qualitativ hochwertiges Bild, insbesondere was den Hell/Dunkel-Kontrast und die Konturenschärfe betrifft.

## Patentansprüche

1. Bildschirm für die magnetische Bildaufzeichnung, bestehend aus einem unmagnetischen, transparenten Träger (2), der an seiner Rückseite mit einem Belag (7) versehen ist, in den Kapseln (5) eingelagert sind, in denen sich ein in einer ölartigen Flüssigkeit dispergiertes Gemisch von magnetischen, lichtabsorbierenden Partikeln (3) und unmagnetischen, lichtreflektierenden Partikeln (4) befindet, dadurch gekennzeichnet, daß die die lichtabsorbierenden und die lichtreflektierenden Partikel (3, 4) enthaltenden Kapseln in mindestens zwei unterschiedlichen Größen (5A, 5B) bei einem maximalen Durchmesser von 1000 Mikron einerseits und bei einem minimalen Durchmesser von 100 Mikron andererseits vorliegen.

2. Bildschirm nach Anspruch 1, gekennzeichnet durch Kapseln (5A, 5B) mit einem Durchmesser von 400 Mikron und Kapseln mit einem Durchmesser von 200 Mikron.

3. Bildschirm nach Anspruch 1 oder Anspruch 2, dadurch gekennzeichnet, daß die in den Kapseln (5A, 5B) enthaltenen magnetischen, lichtabsorbierenden Partikel (3) in mindestens zwei Größen in einem Bereich von 0,2 Mikron bis zu mehreren Mikron vorliegen.

4. Bildschirm nach Anspruch 3, dadurch gekennzeichnet, daß in den Kapseln (5A, 5B) magnetische, lichtabsorbierende Partikel (3) einer Größe von 0,3 Mikron und einer Größe von 0,5 Mikron vorliegen.

5. Bildschirm nach einem der Ansprüche 1 bis 4, gekennzeichnet durch ein Verhältnis der magnetischen lichtabsorbierenden Partikel (3) und der unmagnetischen, lichtreflektierenden Partikel von 1 : 8 bis 1 : 1.

6. Bildschirm nach einem der Ansprüche 1 bis 5, dadurch gekennzeichnet, daß die Kapseln (5A, 5B) zusätzlich aus hartmagnetischem Ferrit bestehende, nach dem Auftrag des die Kapseln (5A, 5B) enthaltenden Belages (7) auf den Bildschirmträger (2) in Permanentmagneten überführbare Partikel (9) enthalten.

7. Bildschirm nach Anspruch 6, dadurch gekennzeichnet, daß die Partikel (9) aus hartmagnetischem Ferrit Samarin, Kobald und Kupfer enthalten.

8. Bildschirm nach Anspruch 6 oder Anspruch 7, gekennzeichnet durch ein Verhältnis der magnetischen lichtabsorbierenden Partikel (3) , der unmagnetischen, lichtreflektierenden Partikel (4) und der im auf den Bildschirmträger (2) aufgebrachten Zustand Permanentmagneten ausbildenden Partikel (9) von 60 : 30 : 10.

9. Bildschirm nach einem der Ansprüche 1 bis 8, dadurch gekennzeichnet, daß in den Bildschirmbelag (7) zusätzlich lediglich Öl enthaltende Kapseln (6) wesentlich kleineren Duchmessers als die die magnetischen und die die unmagnetischen Partikel (3, 4) enthaltenden Kapseln (5A, 5B) eingelagert sind.

10. Bildschirm nach Anspruch 9, gekennzeichnet durch ein Verhältnis der größere magnetische und unmagnetische Partikel (3, 4) enthaltenden Kapseln (5A), der kleineren magnetischen und unmagnetische Partikel (3, 4) enthaltenden Kapseln (5B) und der lediglich Öl enthaltenden Kapseln von 10 : 5 : 3.

11. Bildschirm nach einem der Ansprüche 1 bis 10, gekennzeichnet durch in den Kapseln (5A, 5B) enthaltende magnetische Partikel (3) mit lipophil eingestellter Oberfläche.

12. Bildschirm nach einem der Ansprüche 1 bis 11, gekennzeichnet durch in den Kapseln (5A, 5B) enthaltene unmagnetische Partikel (4) mit lipophil eingestellter Oberfläche.

## Claims

1. Display screen for magnetic image recording, comprising a non-magnetic, transparent support (2), which is provided on its rear surface with a covering (7), in which capsules (5) are incorporated, a mixture of magnetic, light-absorbing particles (3) and non-magnetic, light-reflecting particles (4) being situated in said capsules and being dispersed in an oil-like fluid, characterised in that the capsules, which contain the light-absorbing particles (3) and the light-reflecting particles (4), have at least two different sizes (5A, 5B) with a maximum diameter of 1000 microns, on the one hand, and with a minimum diameter of 100 microns, on the other hand.

2. Display screen according to claim 1, characterised by capsules (5A, 5B) with a diameter of 400 microns and capsules with a diameter of 200 microns.

3. Display screen according to claim 1 or claim 2, characterised in that the magnetic, light-absorbing particles (3), which are contained in the capsules (5A, 5B), are in at least two sizes within a range of between 0.2 micron and several microns.

4. Display screen according to claim 3, characterised in that magnetic, light-absorbing particles (3) are in the capsules (5A, 5B) in a size of 0.3 micron and a size of 0.5 micron.

5. Display screen according to one of claims 1 to 4, characterised by a ratio between the magnetic, light-absorbing particles (3) and the non-magnetic, light-reflecting particles of between 1 : 8 and 1 : 1.

6. Display screen according to one of claims 1 to 5, characterised in that the capsules (5A, 5B) additionally contain particles (9), which are formed from hard-magnetic ferrite and are convertible into permanent magnets once the covering (7), containing the capsules (5A, 5B), has been applied to the display screen support (2).

7. Display screen according to claim 6, characterised in that the particles (9) of hard-magnetic ferrite contain samarium, cobalt and copper.

8. Display screen according to claim 6 or claim 7, characterised by a ratio between the magnetic, light-absorbing particles (3), the non-magnetic, light-reflecting particles (4) and the particles (9), which form permanent magnets in the state applied to the display screen support (2), of 60 : 30 : 10.

9. Display screen according to one of claims 1 to 8, characterised in that only oil-containing capsules (6) of a substantially smaller diameter than the capsules (5A, 5B) containing the magnetic particles (3) and the non-magnetic particles (4) are additionally incorporated in the display screen covering (7).

10. Display screen according to claim 9, characterised by a ratio between the larger capsules (5A) containing magnetic and non-magnetic particles (3, 4), the smaller capsules (5B) containing magnetic and non-magnetic particles (3, 4), and the capsules only containing oil of 10 : 5 : 3.

11. Display screen according to one of claims 1 to 10, characterised by magnetic particles (3) contained in the capsules (5A, 5B) and having a lipophilically set surface.

12. Display screen according to one of claims 1 to 11, characterised by non-magnetic particles (4) contained in the capsules (5A, 5B) and having a lipophilically set surface.

## Revendications

1. Ecran pour l'enregistrement magnétique d'images, constitué d'un support (2) transparent, non magnétique, qui est pourvu sur sa face arrière d'une garniture (7), dans laquelle sont incluses des capsules (5), dans lesquelles se trouvent un mélange, dispersé dans un liquide huileux, de particules (3) magnétiques, absorbant la lumière et de particules (4) non magnétiques, réfléchissant la lumière, caractérisé en ce que les capsules contenant les particules (3, 4) absorbant la lumière et réfléchissant la lumière se trouvent dans au moins deux tailles (5a, 5b) différentes avec un diamètre maximal de 1 000 microns d'une part et avec un diamètre minimal de 100 microns d'autre part.

2. Ecran selon la revendication 1, caractérisé par des capsules (5a, 5b) d'un diamètre de 400 microns et par des capsules d'un diamètre de 200 microns.

3. Ecran selon la revendication 1 ou la revendication 2, caractérisé en ce que les particules (3) magnétiques, absorbant la lumière, contenues dans les capsules (5a, 5b), se trouvent dans au moins deux tailles dans une plage allant de 0,2 micron à plusieurs microns.

4. Ecran selon la revendication 3, caractérisé en ce que dans les capsules (5a, 5b) se trouvent des particules (3) magnétiques, absorbant la lumière d'une taille de 0,3 micron et d'une taille de 0,5 micron.

5. Ecran selon l'une des revendications 1 à 4, caractérisé par un rapport entre les particules (3) magnétiques absorbant la lumière et les particules non magnétiques, réfléchissant la lumière de 1 : 8 à 1 : 1.

6. Ecran selon l'une des revendications 1 à 5, caractérisé en ce que les capsules (5a, 5b) contiennent en supplément des particules (9), faites de ferrite magnétique dure, pouvant être transférées, après l'application de la garniture (7) contenant les capsules (5a, 5b), sur le support d'écran (2), dans des aimants permanents.

7. Ecran selon la revendication 6, caractérisé en ce que les particules (9) en ferrite magnétique dure contiennent du samarium, du cobalt et du cuivre.

8. Ecran selon la revendication ou la revendication 7, caractérisé par un rapport des particules (3) magnétiques absorbant la lumière, des particules (4) non magnétiques réfléchissant la lumière et des particules (9) formant des aimants permanents, à l'état appliqué sur le support d'écran (2), de 60 : 30 : 10.

9. Ecran selon l'une des revendications 1 à 8, caractérisé en ce que dans la garniture d'écran (7) sont incluses en supplément des capsules (6), contenant uniquement de l'huile, de diamètre sensiblement plus petit que les capsules (5a, 5b) contenant les particules (3, 4) magnétiques et non magnétiques.

10. Ecran selon la revendication 9, caractérisé par un rapport des capsules (5a) contenant des plus grandes particules (3, 4) magnétiques et non magnétiques, des capsules (5b) contenant des plus petites particules (3, 4) magnétiques et non magnétiques et des capsules contenant uniquement de l'huile, de 10 : 5 : 3.

11. Ecran selon l'une des revendications 1 à 10, caractérisé par des particules (3) magnétiques contenues dans les capsules (5a, 5b) avec surface réglée lipophile.

12. Ecran selon l'une des revendications 1 à 11, caractérisé par des particules (4) non magnétiques contenues dans les capsules (5A, 5B), avec surface réglée lipophile.
